# EUROPEAN PATENT SPECIFICATION

(11) **EP 1 128 608 B1**
(45) Date of publication and mention of the grant of the patent: **01.03.2006**
(21) Application number: 00128674.9
(22) Date of filing: 29.12.2000
(51) Int. Cl.: H04L 12/56

(54) **Method and means for classifying data packets**
Verfahren und Vorrichtung für Klassifizierung von Datenpaketen
Procédé et dispositif de classification de paquets de données

(30) Priority: 27.01.2000 EP 00810073
(43) Date of publication of application: 29.08.2001
(73) Proprietor: International Business Machines Corporation, Armonk, NY 10504 (US)
(72) Inventor: Engbersen, Antonius P.J., 8835 Feusisberg (CH); Van Lunteren, Jan, 8134 Adliswil (CH)
(74) Representative: Toleti, Martin

(56) References cited:
- US-A- 5 719 864
- US-A- 5 951 651
- BUDDHIKOT M, SURI S, WALDVOGEL M: "Space decomposition techniques for fast layer-4 switching" PROCEEDINGS OF CONFERENCE ON PROTOCOLS FOR HIGH-SPEED NETWORKS, 25 August 1999 (1999-08-25), pages 25-41, XP001080582 Salem, MA, USA
- SRINIVASAN V ET AL: "FAST AND SCALABLE LAYER FOUR SWITCHING" COMPUTER COMMUNICATIONS REVIEW, ASSOCIATION FOR COMPUTING MACHINERY. NEW YORK, US, vol. 28, no. 4, October 1998 (1998-10), pages 191-202, XP000914435 ISSN: 0146-4833
- LAKSHMAN T V ET AL: "HIGH-SPEED POLICY-BASED PACKET FORWARDING USING EFFICIENT MULTI-DIMENSIONAL RANGE MATCHING" COMPUTER COMMUNICATIONS REVIEW, ASSOCIATION FOR COMPUTING MACHINERY. NEW YORK, US, vol. 28, no. 4, October 1998 (1998-10), pages 203-214, XP000914436 ISSN: 0146-4833
- GUPTA P ET AL: "PACKET CLASSIFICATION ON MULTIPLE FIELDS" COMPUTER COMMUNICATIONS REVIEW, ASSOCIATION FOR COMPUTING MACHINERY. NEW YORK, US, vol. 29, no. 4, October 1999 (1999-10), pages 147-160, XP000852195 ISSN: 0146-4833

## Description

### Field of Invention

Present invention is related to the field of handling data packets in a communication system, by investigating their contents to detect, for different criteria, the respective criteria values contained in each packet, to use the criteria values for classifying the packet and to determine the applicable rule for further handling including forwarding of the packet.

### Background of Invention

For handling packets in a communication system, e.g. the Internet, normally the destination address is evaluated to determine, in each of the intermediate nodes on the path of the packet, on which output or link it has to be forwarded. In various kinds of communication systems, different types of services are provided depending on the destination address, the origin adress, or other data provided in the header of each packet. The difference in the type of service may be the priority under which a packet is handled or forwarded, the price which has to be paid for the transmission, the denial of handling the packet at all for certain originators, etc. Due to the tremendous amounts of packets (or generally, data items) to be handled in today's systems, the speed of recognition of the criteria received with the packets and the resulting decision which type of handling is to be selected, must be made in extremely short time.

### Known Approaches / Prior Solutions

Several methods for classifying packets in communication systems are known from publications. In a paper by T.V.Lakshman and D.Stiliadis entitled "High-Speed Policy-based Forwarding Using Efficient Multi-dimensional Range Matching", Proc. ACM SIGCOMM'98, Comp.Commun.Rev. Vol.28, No.4, Oct. 1998, pp.203-214, a method is described for finding, among a given set of rules, the one that is applicable for handling a received packet. For each of n dimensions (which e.g. represent destination address, origin address etc.), the respective dimension is partitioned into non-overlapping intervals each comprising a range of values from the respective dimension. The intervals are so selected that within any interval, no change of applicable rules occurs. For each such interval or range, a bitmap is generated including one bit for each rule existing in the system: when a rule applies in the range, the bit is one, otherwise it is zero. The bits within the bitmap are ordered according to the priority of the rules to which the bits correspond. This allows to select the rule with the highest priority in case multiple rules are applicable. When a packet is to be classified, it is first detected for each dimension into which interval or range the packet belongs, and then an intersection is made of the bitmaps of respective intervals, by making a bitwise AND combination. The result then indicates which rules are applicable, and one rule is finally selected according to the priority scheme. This allows fast classification for a small number of rules.
However, when there are hundreds or thousands of rules to be considered, the bitmaps will become large and require much storage. Access to these large bitmaps and performing an intersection over multiple of these bitmaps will require a lot of time, and therefore will limit the number of rules that can be supported at a given classification speed. In addition, the ordering of the bits within a bitmap based on the priority of the corresponding rules, makes it not possible to perform incremental updates on the data structure within a reasonable time: insertion of a new rule would require modification of all the bitmaps that correspond to all of the the intervals in all dimensions.

A paper entitled "Packet Classification on Multiple Fields" by P.Gupta and N.McKeown, ACM SIGCOMM'99, published in Comp.Commun.Rev. Vol.29, No.4, Oct.1999, pp.147-160, describes a method in which the classification is done in several sequential steps. In the first step the packet header is split into multiple chunks that are used to simultaneously index multiple memories. In succeeding steps, the lookup results of previous steps are combined to form new chunks to simultaneously access different memories. In a preprocessing step so called chunk equivalence sets are derived for each chunk, from the projection of the various ranges involved in the classification rules on the chunk (for first step chunks) or from the possible intersections of the chunk equivalence sets of previous steps (for chunks in succeeding steps). Each element is assigned a so called equivalence class ID, which is obtained by binary numbering the set elements starting at zero. Each lookup result that is achieved by indexing a memory using a chunk value is the equivalence class ID corresponding to the element of the chunk equivalence set to which the value relates. Since the size of the equivalence ID is typically smaller than the size of the chunk used to index the memory, this can be regarded as a reduction. The memory lookup in the last step will provide the ID of the applicable rule with the highest priority. In this way a total reduction is achieved from the size of all relevant packet header parts to the size of a rule identification index.
The disadvantages of this method are its large storage requirements and inefficient storage usage. Dependent upon the rule characteristics, many memories may contain the same values many times. Directly related to this, updating the data structure by inserting or removing a rule can affect many memory locations preventing fast incremental updates. For large numbers of rules, the preprocessing will take considerable time.

"Fast and Scalable Layer Four Switching", Srinivasan et al., Computer Communications review, Association for Computing Machinery, New York, US, vol. 28, no. 4, October 1998 (1998-10), pages 191 - 202, XP000914435 ISSN: 0146-4833, describes what is called a "Cross-Producting" approach: On each field to be searched a best matching prefix operation is applied to, the results are concatenated, and the concatenation which is called "Cross-Product" is compared to a hash table providing all possible concatenations resulting from the first operation.

"Space Decomposition Technique for Fast Layer-4 Switching", Buddhikot et al., Proceedings of Conference on Protocols for High-Speed Networks, 25 August 1999 (1999-08-25), pages 25-41, XP002201601 Salem, MA, USA, is teaching a multi-field search: The relevant fields of an incoming packet are extracted and the respective bits are concatenated in an interleaving way. The 2-dim search space is organized in a certain way according to quadtrees, which points the concatenation of the search fields in an efficient way to the point in the search space, as e.g. the first four bits of the concatenated search string - which represent the first two MSB of the individual bit strings - point in a first step into the right quarter of the search space, where a corresponding rule entry can be found.

All of the known methods suggested in the literature, despite allowing fast classification in several situations, will not allow the necessary handling speed when the number of rules (and the number of criteria which determine the applicable rule) is very high, as can be expected for the Internet in the near future.

### Objects of the Invention

It is an object of the invention to devise a method and an apparatus for classifying data packets - also referred to as data items in the following - to be processed with respect to applicable rules, in response to the values of a plurality of criteria contained in each packet; the invention should allow to exploit a given, irregular distribution and interrelation of rules with respect to intervals of criteria values, for optimally mapping of this rule distribution and interrelation into the structure of a classification and search mechanism, so that efficient lookup procedures can be used. It is also an object to devise a classification method and apparatus that allow fast and simple adaptation of search and classification structures to changes in the distribution of rules over input value ranges, e.g. the addition of new rules. A further object is to reduce the required size of storage and to minimize the time required for classifying each packet and for determining an applicable rule, in response to criteria input values received with a packet.

The invention for achieving theses objects is defined in the claims. Its advantages are, in particular, the following: The invention allows to determine the applicable class, e.g. the required handling rule for each packet (or data item to be classified), in a time which is compatible to the transmission speed of the packets so that no delay is encountered.
Furhermore, well-known longest-matching-prefix searching methods can be used at least for the final selection step. In addition, updating of the mapping databases (lookup tables) when new rules are added or assignments between ranges and rules change, can be easily effected by adding a few entries in the tables without having to alter much of the stored data; complete updatings can be made at regular intervals for optimizing, without delaying previous immediate adaptation.

Embodiments of the invention are described in the following with reference to the drawings illustrating the inventive procedure.

### Listing of Drawings

Fig.1 is a general, schematic illustration of the inventive procedure for classifying packets.
Fig.2 is a diagram showing the relation between rules for packet classification and the ranges of criterion values (input values) for which they are valid.
Fig.3 is a rule/range diagram together with primitive ranges for generating range tokens, and the range tokens which were assigned to basic ranges, for a first embodiment of the invention.
Fig.4 illustrates details of the primitive ranges of Fig.3.
Fig.5 shows the resulting search tree for the first embodiment, for longest-matching-prefix-lookup operations to determine the applicable rule for a given input.
Fig.6 is a rule/range diagram together with primitive ranges for generating range tokens, and the range tokens which were assigned to basic ranges, for a second embodiment of the invention.
Fig.7A and Fig.7B illustrate details of the primitive ranges of Fig.6.
Fig.8 shows the resulting search tree for the second embodiment, for longest-matching-prefix lookup operations to determine the applicable rule for a given input.
Fig.9 is a modified rule/range diagram similar to that of Fig.2, with an additional rule inserted, to explain updating of the search databases for packet classification.
Fig.10 is a rule/range diagram together with primitive ranges for generating range tokens, for the modified rule distribution of Fig.9, for explaining the updating operation.
Fig.11 illustrates details of the primitive ranges of Fig.10.
Fig.12 shows the resulting updated search tree (only upper portion), based on the search tree of Fig.5 of the first embodiment, for the modified rule distribution of Fig.9 and Fig.10.

### Detailed Description

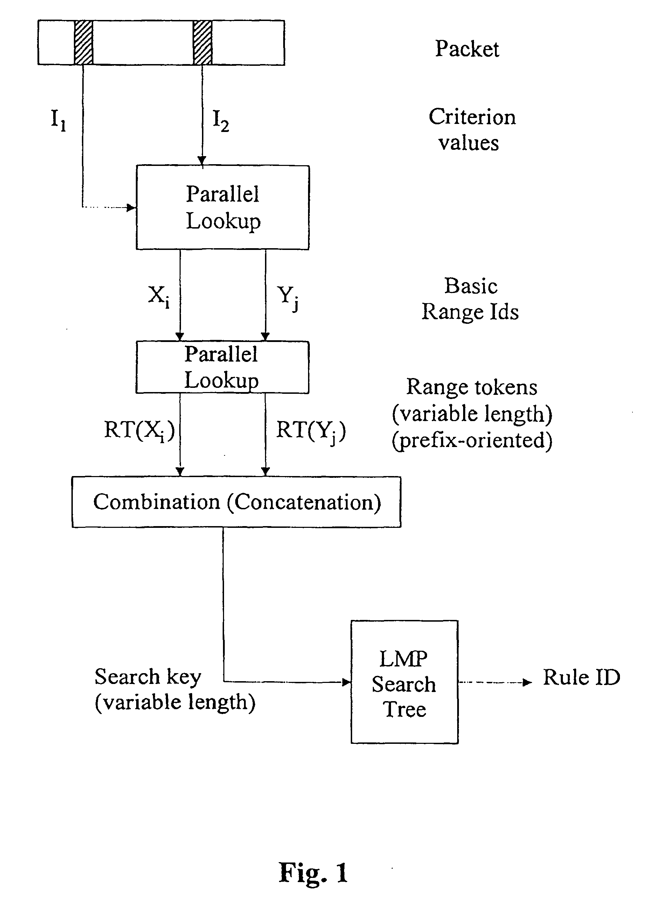

A brief general description of the invention is given with reference to Fig.1.
As a first step in the classification process, input values of the relevant criteria are taken from the received input item. For this general description, it is assumed that the items to be classified are communication packets, and that the criteria are the destination address and the origin address. The two particular address values I₁ and I₂ are taken as input values for a lookup procedure in stored tables. In the next step it is determined, separately for each criterion, into which range (value interval) of preselected basic ranges the respective input value falls. This results in the identification of two basic ranges Xᵢ and Yⱼ for the two input values. So far, these steps are the same as in other classification procedures already known.

Now, in another lookup operation in stored tables, a range token is found for each of the previously determined basic ranges, thus obtaining range tokens RT(Xᵢ) and RT(Yⱼ). At least one of these range tokens is obtained from a set of range tokens of non-uniform (variable) length. For example, the set of range tokens RT(Yⱼ) may include tokens with a length between 1 bit and n bits. The range tokens are so selected and mapped (assigned) to the basic ranges that they form a prefix-oriented set adapted to the distribution of rules over the value ranges of input values. The two range tokens obtained for the actual input values are then used, in a predetermined combination, for a longest-matching-prefix lookup or search operation in a stored data structure which may be a binary search tree, and which is designed on the basis of rule prefixes to optimally utilize the occurring range token combinations as search keys, to finally obtain as output the identifier of that rule which is to be used for the particular combination of input values I₁ and I₂ received.

In a first embodiment of the invention to be described, only one of the range tokens is of variable length, while the other has a fixed length. In this case, the two range tokens are concatenated to obtain a single search key of variable length which is used as input for the longest-matching-prefix search operation.

In a second embodiment (described later), both range tokens are of variable length. These are then used together, as two separate partial search keys, as input to a special longest-matching-prefix lookup or search operation to determine the required rule identifier.

In this general description and in the two described embodiments, only two criteria are evaluated for classifying a received data item, e.g. for finding the rule according to which a received packet is to be further processed. The invention is, however, also applicable to systems in which more than two criteria are evaluated for the classification of an item. It is then just necessary to provide the used variables (basic range identifiers Xi, ..... and range tokens RT(Xi), .....) in an n-dimensional system. This would result, by concatenation, either in a single search key for the LMP (longest-matching-prefix) lookup operation if only one token is of variable length and the (n-1) other tokens are of fixed length. Or, if all n tokens were of variable length, then n separate partial search keys will be presented as input to the LMP search operation, as will be principally explained for the second embodiment.

In the following, two embodiments of the invention will now be described as examples. Furthermore, a method is briefly explained for updating databases for packet classification which were generated according to the invention. Specific terms which are used in present description are briefly listed and defined at the end.

### Example 1

In this example four rules will be used that cover the following ranges (called rule ranges) in two dimensions which will be denoted as X and Y dimension:

| Rule | Priority | X Rule Range | Y Rule Range |
|---|---|---|---|
| 1 | 1 | 20-69 | 10-59 |
| 2 | 2 | 50-99 | 40-89 |
| 3 | 2 | 10-29 | 50-79 |
| 4 | 3 | 60-89 | 30-49 |

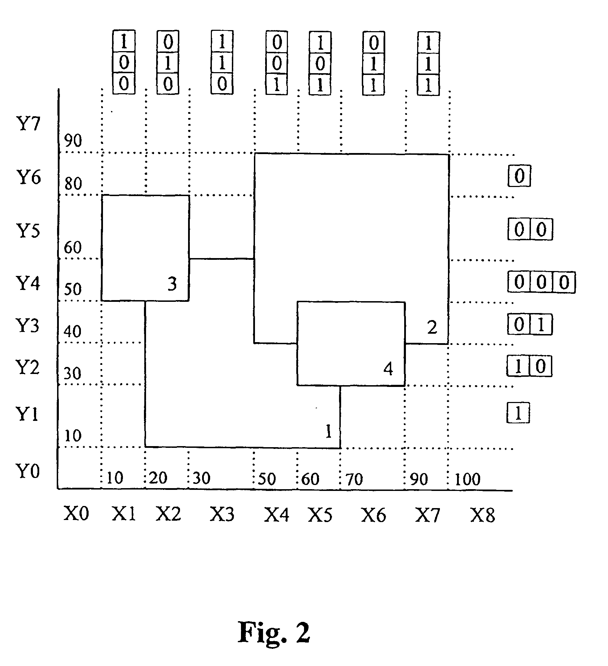

Fig.2 shows in a rule diagram (rule/range diagram) the rules as two-dimensional rectangles. The non-overlapping intervals X0-X8 and Y0-Y7 are obtained by projecting the range boundaries of all rules onto the X and Y axes. These intervals will be called basic ranges. The basic ranges are the following ones:

| Basic Range | | Basic Range | |
|---|---|---|---|
| X0 | < 10 | Y0 | < 10 |
| X1 | 10-19 | Y1 | 10-29 |
| X2 | 20-29 | Y2 | 30-39 |
| X3 | 30-49 | Y3 | 40-49 |
| X4 | 50-59 | Y4 | 50-59 |
| X5 | 60-69 | Y5 | 60-79 |
| X6 | 70-89 | Y6 | 80-89 |
| X7 | 90-99 | Y7 | >= 90 |
| X8 | >= 100 | | |

Note that in the diagram of Fig.2, the basic ranges are either 10 or 20 units wide (e.g., X2=20-29 and X3=30-49). Of course, any other (non-decimal) width of the basic ranges is possible; each basic range can have its own individual width.

In Fig.2, when two rules overlap, then the rule with the higher priority is drawn 'on top' of the rule with the lower priority. For example rule 3 overlaps rule 1 in [X2,Y4] and since rule 3 has a higher priority than rule 1, it is drawn 'on top'.

### Variable-length range tokens

A "range token" is assigned to each of the basic ranges (except for ranges not covered by rules, which may receive a special range token not discussed here), and the set of range tokens representing one particular range intersection (corresponding to the current input values from a received packet) is used in combination to determine the applicable rule.
The concept of the invention involves the assignment of variable-length range tokens to the basic ranges in at least one dimension. In this example, variable-length range tokens will be assigned only to the basic ranges in the Y dimension.

### Primitive range hierarchy

Primitive ranges, ordered in a hierarchy, are introduced to allow an effective and optimal generation of range tokens in response to the particular existing distribution and interrelation of rules.

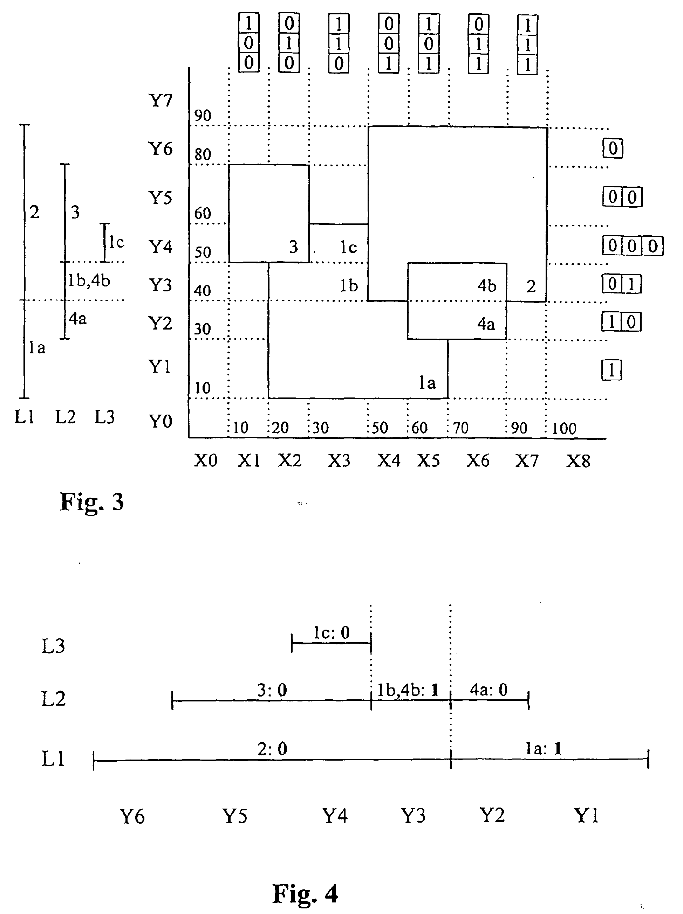

One way to derive range tokens for the given set of rules is shown in Fig.3. The Y rule ranges are used to build a hierarchy of layers containing so called primitive ranges as shown at the left side of the Y axis. The layering (L1, L2, L3) is shown in a horizontal way from left to right for illustrative purposes; the 'bottom' of the hierarchy is formed by the primitive ranges that are shown most to the left (layer L1). In Fig.4, the primitive range hierarchy is shown in a normal vertical way.

The construction of the primitive range hierarchy is based on a certain ordering of the rules. The rule order can be selected in different ways, for example based on rule priority, size of the ranges, expected lifetime of a rule, or a combination. By an appropriate choice of the rule ordering it is possible to minimize the number of primitive ranges in the hierarchy, thereby reducing the neccessary number and the length of the range tokens, which then results in a reduction of the required storage. Here the following order will be used: rule 2, rule 3, rule 1, rule 4. The primitive range hierarchy has the following properties: Primitive ranges at the bottom layer (in Fig.3 the leftmost 'vertical layer' L1) have to be disjoined (non-overlapping), and primitive ranges that are in higher layers (L2 and L3) have to be a subset of primitive ranges at a lower layer.

In Fig.3, the entire Y rule range of rule 2 is placed as primitive range 2 at layer 1 (because rule 2 is the highest in the rule order). Then, according to the mentioned rule order, the Y rule range of rule 3 is taken, and is put as primitive range 3 at layer 2 on top of the primitive range 2. Primitive range 3 is a subset of the primitive range 2.

Next, the Y rule range of rule 1 is taken. The Y rule range of rule 1 does overlap with both primitive ranges 2 and 3. In order to preserve the property that primitive ranges in a higher layer have to be a subset of primitive ranges at a lower layer, the Y rule range of rule 1 is divided into three primitive ranges, denoted as 1a, 1b and 1c. Primitive range 1c is a subrange of the primitive range 3 and can therefore be placed on top of primitive range 3, at layer 3. Primitive range 1b is a subrange of primitive range 2 and disjoined with the primitive range 3, and is therefore placed at layer 2, on top of the primitive range 2. The remaining part of the Y range of rule 1, primitive range 1a, is disjoined with primitive range 2, and is therefore placed at layer 1.

Finally, the Y rule range of rule 4 is taken. This range does overlap with both primitive ranges 1a and 1b. In a similar way as was done with the Y rule range of rule 1, now the Y rule range of rule 4 is split into two primitive ranges 4a and 4b. Primitive range 4a is a subset of primitive range 1a and is therefore placed on top of primitive range 1a at layer 2. Primitive range 4b equals primitive range 1b. It is simply 'merged', i.e., the original primitive range 1b is now called primitive range "1b,4b".

Fig.4 shows the primitive range hierarchy in a vertical way.

### Primitive range IDs

Each of the primitive ranges in the hierarchy is now assigned an identification (separately for each layer, and within each layer separately for each set of primitive ranges being associated with one of the primitive ranges at a lower level) in the following way:

If *k* equals the number of primitive ranges at the lowest layer, layer 1, then each of these primitive ranges is assigned a unique binary number with at most *log(k)* bits. In Fig.4 primitive range 2 is assigned ID '0', and primitive range 1a is assigned ID '1'.

The same process is repeated for each set of primitive ranges at a given layer that are subranges of one primitive range at a previous layer. For example, primitive range 3 and primitive range 1b,4b are the two subranges at layer 2 of primitive range 2 at layer 1. Primitive range 3 is assigned ID '0' and primitive range 1b,4b is assigned ID '1'. Fig.4 shows all the IDs that have been assigned in this way to the primitive ranges in the hierarchy.

By an appropriate selection of the rule order, one can minimize the number of primitive ranges and the number of required hierarchy layers.

### Range tokens

Based on the primitive range IDs within the hierarchy, the range tokens for all basic ranges are now derived in the following way. For each basic range the range token consists of the concatenation of all the IDs of the primitive ranges that the given basic range is a subset of, where the order of the concatenation is according to the layering of these primitive ranges in the hierarchy (bottom to top layer).

For example, the range token "000" for basic range Y4 is derived in the following way. Basic range Y4 is a subset of primitive ranges 2, 3, and 1c as can be seen in Fig.3. The IDs of these primitive ranges are "0", "0", and "0" according to Fig.4, which when concatenated results in "000". Fig.3 shows all the range tokens for the basic ranges (Y1...Y6) in the Y dimension at the right side that are derived in this way.

In this example only the basic ranges in the Y dimension are assigned variable-length range tokens. The basic ranges in the X dimension are assigned fixed-length range tokens, simply by numbering the basic ranges that are a subset of at least one rule range, with binary numbers of 3 bits (for 7 basic ranges), as can be seen in Fig.3 (on top of the rule/range diagram).

### Rule prefixes

In a classification operation according to the structures in this example, for a given input the X and Y basic ranges are determined in parallel. The given input is the set of relevant criteria values extracted from a received packet, e.g. one particular destination address and one particular origin address. For each input value, the basic range into which it falls and the associated range token are found e.g. in a lookup operation. The lookup operations for all input values are done in parallel to save time. These lookup operations are standard and therefore need no further explanation here. The resulting fixed-size range token of the found X basic range is concatenated with the resulting variable-size range token of the found Y basic range. The concatenation result is used as search key for a longest-matching-prefix search operation to determine the highest priority rule that applies on the given input of the classification operation.

An important element are the "rule prefixes" which determine the organization of the lookup or search tree which is finally used for finding the rule identifier in reponse to the concatenated range tokens. Each rule prefix represents the tree path to one rule identifier. The appropriate selection of these rule prefixes allows longest-matching-prefix lookup operations with optimal time and storage requirements.

The rule prefixes, against which the concatenated parallel search results (i.e., the search keys) are tested, are derived in the following way:

For each basic range in the X dimension, first the rules are determined for which the given basic range is a subset of the X rule range. Next, for each of these rules and the given basic X range it is determined which part of the respective Y rule range is not covered by a higher priority rule. For this part of the Y rule range the smallest set of primitive ranges is determined of which the Y rule range part is a subset. For each primitive range in the found set, a separate rule prefix is created by concatenating the range token of the given basic range in the X dimension with the ID of the given primitive range itself (in the Y dimension) and the IDs of all the primitive ranges that are below the given primitive range, in the order of the layering in the hierarchy. This provides a rule prefix for the given rule.

For example, basic range X5 is part of the X rule ranges of rules 1, 2, and 4. For rule 1, only the Y range Y1 is not covered by the higher priority rules 2 and 4. The smallest primitive range for which Y1 is a subset is primitive range 1a. A rule prefix is now obtained by concatenating the fixed sized range token of X5 ("101") with the variable size ID of primitive range la ("1"): Rule prefix 1011 ⇒ rule 1.

For rule 2 the Y ranges Y4 to Y6 are not covered by the higher priority rule 4. The smallest primitive range for which Y4 to Y6 are a subset is primitive range 2. A rule prefix is now obtained by concatenating the range token of X5 ("101") with the variable size ID of primitive range 2 ("0"): Rule prefix 1010 ⇒ rule 2.

Rule 4 is not covered by any higher priority rule for basic range X5. The smallest set of primitive ranges for which Y ranges Y2 and Y3 are a subset are primitive ranges 4a and "1b,4b". For each of these primitive ranges a rule prefix is determined. For primitive range 4a, the rule prefix is obtained by concatenating the range token of X5 ("101") with the ID of primitive range 1a ("1") and the ID of primitive range 4a ("0"): Rule prefix 10110 ⇒ rule 4.

For primitive range 4b, the rule prefix pointing to "rule 4" is obtained by concatenating the range token of X5 ("101") with the ID of primitive range 2 ("0") and the ID of primitive range "1b,4b" ("1"): Rule prefix 10101 ⇒ rule 4. By performing the same procedure for all basic ranges in the X dimension the following list of rule prefixes is obtained:

| | Rule Prefix | |
|---|---|---|
| 1) | 00100 | ⇒ rule 3 |
| 2) | 01000 | ⇒ rule 3 |
| 3) | 01001 | ⇒ rule 1 |
| 4) | 0101 | ⇒ rule 1 |
| 5) | 011000 | ⇒ rule 1 |
| 6) | 01101 | ⇒ rule 1 |
| 7) | 0111 | ⇒ rule 1 |
| 8) | 1001 | ⇒ rule 1 |
| 9) | 1000 | ⇒ rule 2 |
| 10) | 1011 | ⇒ rule 1 |
| 11) | 10110 | ⇒ rule 4 |
| 12) | 1010 | ⇒ rule 2 |
| 13) | 10101 | ⇒ rule 4 |
| 14) | 11010 | ⇒ rule 4 |
| 15) | 1100 | ⇒ rule 2 |
| 16) | 11001 | ⇒ rule 4 |
| 17) | 1110 | ⇒ rule 2 |

Note that rule prefix 12 is a prefix of rule prefix 13. This can be understood from Fig.3: if for the given input to the classification operation, rule prefix 12 is a matching prefix, then this means that this input relates to a coordinate somewhere in the rectangle [X5,Y3-Y6], which means that rule 2 applies. If rule prefix 13 is found to be a longer matching prefix, then this means that the input relates to a coordinate somewhere in the rectangle [X5,Y3], which means that also rule 4 applies, and since rule 4 has a higher priority, rule 4 will be the output of the classification operation. Also, rule prefix 15 is a prefix of rule prefix 16.

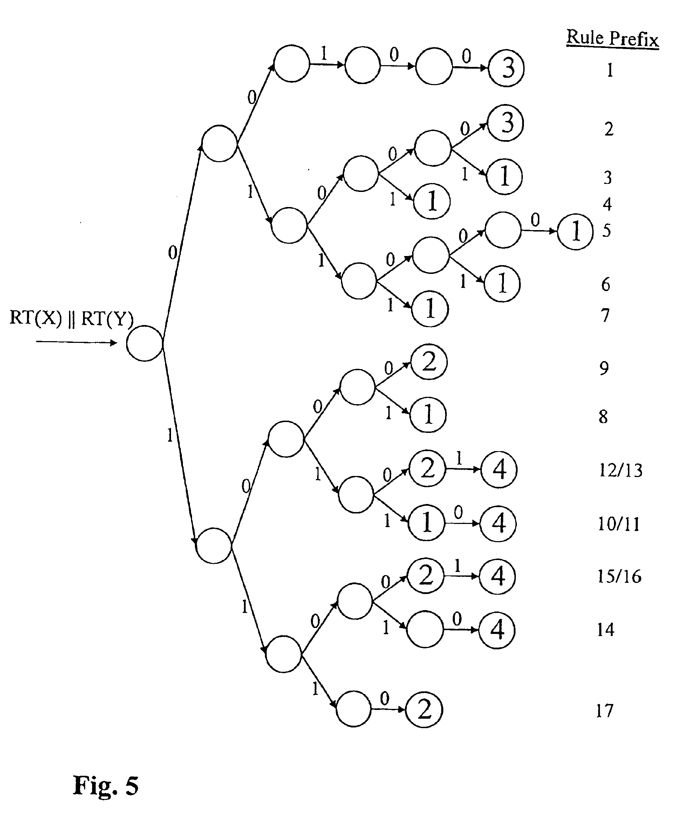

In the literature, several methods have been reported for performing fast longest-matching-prefix search operations. Any of these methods can be applied here. Fig.5 shows a longest-matching-prefix search tree structure for the rule prefix list shown above. It is designed as a binary tree for reasons of simplicity. A short decription of its operation is given later.

### Example 2

In this second example the same four rules are assumed that were used in the first example and which were illustrated in Fig.2.

### Variable-length range tokens

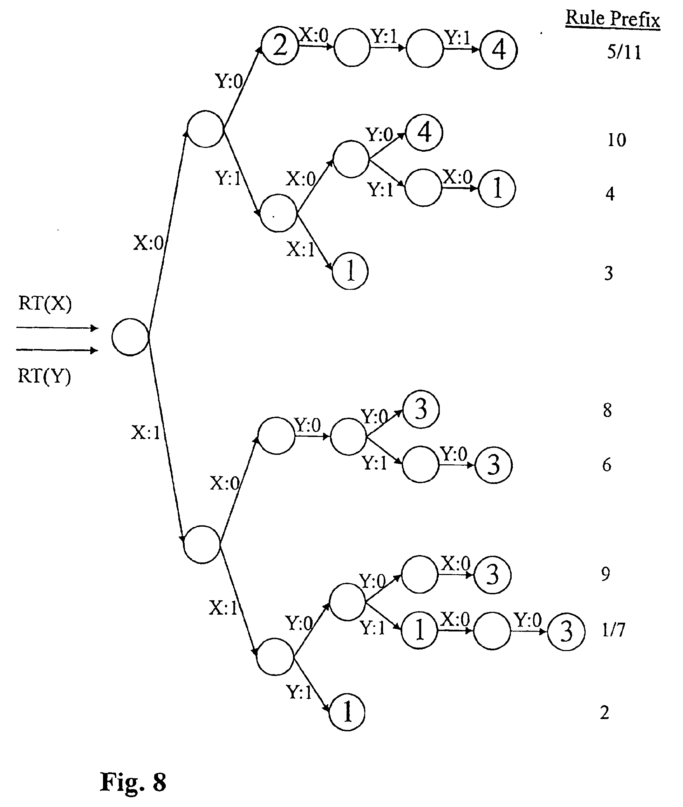

In this example variable-length range tokens will be assigned to the basic ranges in both the X and Y dimensions. This in contrast to the first example, in which variable-length range tokens are assigned to the basic ranges in the Y dimension only.
When variable-length range tokens are used in two (or more) dimensions, an even better optimization of the classification procedure is possible at least for certain relations between rules and ranges. This can be seen from the resulting list of rule prefixes at the end of the description of this example, and from the resulting search tree in Fig.8.

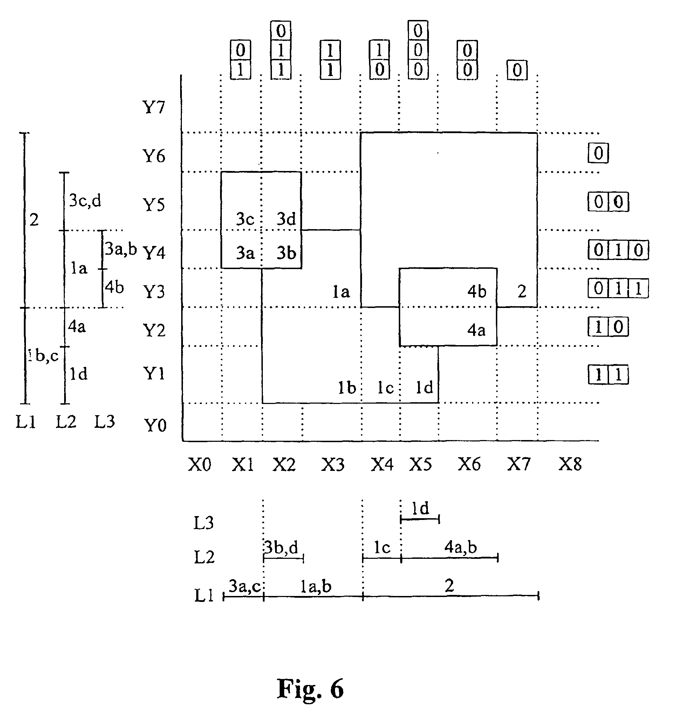

One way to assign variable-length range tokens to basic ranges in both dimensions involves two steps as are shown in Fig.6.

The first step is to split the existing rules into so called subrules such that the two-dimensional rectangles that relate to these subrules are disjoined (non-overlapping) or are included in each other (i.e. the subrule of one rule (e.g. 3b) is included in another rule or in a subrule (e.g. 1a) of another rule). The way in which rules are split into subrules can be based on different criteria, for example on the rule priority, size of the rules ranges, or a combination. For example, in Fig.6, rule 4 is split into two subrules 4a and 4b. As a consequence, subrule 4b is now included in rule 2, and subrule 4a is now disjoined with rule 2.

If a rule is split into subrules then, the subrules that would be completely covered by higher-priority rules can be discarded. For example, in Fig.6, rule 1 is split into subrules 1a, 1b, 1c and 1d. The remaining part of rule 1 is covered by (the lower-left part of) higher-priority rule 2 and (the left part of) higher-priority subrule 4a, and is therefore discarded.

Once the property holds that all rules and subrules are included in each other or are disjoined, as a second step a primitive range hierarchy is build in each dimension. This is done in a similar way as described in the first example. For each dimension, the order of the rules and subrules used to build the primitive range hierarchy, is from larger (sub)rule ranges in the given dimension to smaller (sub)rule ranges. The resulting primitive range hierarchies for the X and Y dimensions are shown below the X axis and to the left of the Y axis, respectively, in Fig.6.

For example, in the X dimension, the X rule range of rule 2 is taken as primitive range 2 at layer 1. On top of primitive range 2, primitive ranges 1c and 4a,b are placed at layer 2, corresponding to subrule 1c and subrules 4a and 4b. On top of primitive range 4a,b a primitive range 1d is placed at layer 3 corresponding to subrule 1d. The layering of these primitive ranges in the X dimension is done according to their sizes. In a similar way, primitive ranges for the Y dimension are generated.

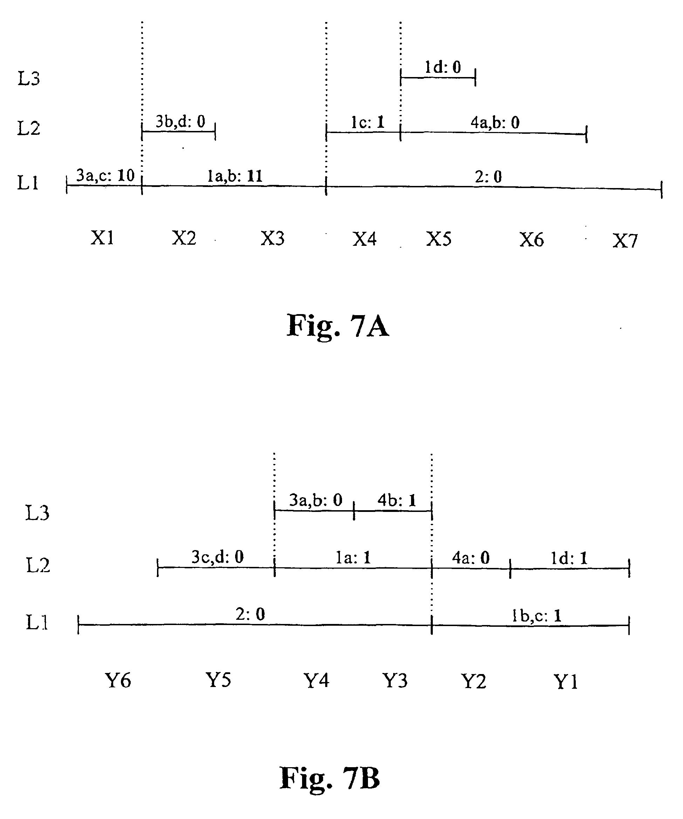

The primitive range IDs are determined in the same way as described for the first example, and are shown in Fig.7A and Fig.7B. Also, the derivation of the variable-length range tokens from the primitive range hierarchy and the primitive range IDs is done in the same way as described for the first example, now for two dimensions. The results are shown in Fig.6, above and on the right side of the rule/range diagram.

### Rule prefixes

If in at least two dimensions, variable-length range tokens are assigned to the basic ranges, then the range tokens that are the results of the parallel search operations to determine the basic range in each dimension for the classification input, are not concatenated to construct an intermediate test result (i.e. a single search key), but are offered as separate bit vectors (two "partial search keys") as input to a modified version of a longest-matching-prefix search, in order to determine the highest priority rule that applies to the given input values of the classification operation. The difference between this modified longest-matching-prefix search operation and a conventional longest-matching-prefix search operation is that in the latter type of operation exactly one bitvector (i.e. a single search key) is used as input that is processed from left to right. On the other hand, in the first type of operation, multiple differently sized bitvectors (two "partial search keys") can be used as input that each are processed from left to right, however, the order in which parts of these various bitvectors are used at a certain point of the search operation, depends on the values of the bitvector parts that already have been processed. This will be illustrated now.

For each unsplit rule and for each subrule that have remained after the previously described split and discard operations, a rule prefix is derived in the following way. In each dimension the primitive range is determined that is equal to the rule range of the given rule or subrule in that dimension. Next, in each dimension the set of all primitive ranges are determined of which the determined primitive range is a subset and including the determined primitive range itself. Finally a rule prefix is created, by concatenating the primitive range IDs of all these primitive ranges, starting with the primitive range ID of the primitive range at layer 1 in the X dimension, then the primitive range ID of the primitive range at layer 1 in the Y dimension, then the primitive range ID of the primitive range at layer 2 in the X dimension, and so on, until all these primitive ranges have been covered. If for a given rule or subrule, the sets of primitive ranges for the X and Y dimensions contain a different number of elements, then the alternating concatenation of the primitive range IDs stops after all the primitive range IDs of one set have been used, and then only primitive range IDs of the remaining set will be used to create the remainder of the rule prefix. An important condition that has to be fulfilled, and which also determines the order in which the primitive range IDs related to the X and Y dimensions are concatenated, is that if a rule or subrule is included in a (lower-priority) rule or subrule, then the primitive range IDs related to the including rule or subrule, have to occur in the same order as in the rule prefix for that included rule or subrule. The reason for this is to avoid backtracking in the longest-matching-prefix lookup procedure for finally obtaining the applicable rule identifier.

For example (cf. Fig.6, Fig.7A and Fig.7B), the rule prefix for subrule 1a can be constructed in the following way. In the X dimension, primitive range 1a,b equals the rule range of subrule 1a, and in the Y dimension, primitive range 1a equals the rule range of subrule 1a. The set of primitive ranges together with their primitive range IDs for which primitive range 1a is a subset (none in this case) in the X dimension, including primitive range 1a,b, and ordered from lower to higher layers, is: { 1a,b: **11** }.

The set of primitive ranges together with their primitive range IDs for which primitive range la is a subset in the Y dimension, including primitive range 1a, and ordered from lower to higher layers, is: { 2: **0**, 1a: **1** }.

Since subrule 1a is not included in any other rule or subrule in Fig.6, the corresponding rule prefix can directly be derived from these sets, simply by alternating the primitive range IDs of these sets starting with the X dimension: Rule prefix X(11) Y(0) Y(1) ⇒ rule 1.

The rule prefix for subrule 3b (which is included in subrule 1a) can be constructed in the following way. In the X dimension, primitive range 3b,d equals the rule range of subrule 3b, and in the Y dimension, primitive range 3a,b equals the rule range of subrule 3b. The set of primitive ranges together with their primitive range IDs for which primitive range 3b,d is a subset in the X dimension, including primitive range 3b,d and ordered from lower to higher layers, is: { 1a,b: **11**, 3b,d: **0** }.

The set of primitive ranges together with their primitive range IDs for which primitive range 3a,b is a subset in the Y dimension, including primitive range 3a,b and ordered from lower to higher layers, is: { 2: **0**, 1a: **1**, 3a,b: **0** }.

Since subrule 3b is included in subrule 1a, the first elements of both sets have to be concatenated in the same order as they occur in the rule prefix related to subrule 1a. The remaining parts of the rule prefix is obtained by concatenating alternatingly the primitive range IDs of the remaining elements from both sets:
Rule prefix X(11) Y(0) Y(1) X(0) Y(0) ⇒ rule 3.

This shows that the rule prefix related to subrule 1a is (in a sense) a prefix of the rule prefix related to subrule 3b.

The rule prefixes for the other rules and subrules are obtained in the same way:

| | Rule Prefix | |
|---|---|---|
| 1) | X(11) Y(0) Y(1) | ⇒ rule 1 (subrule 1a) |
| 2) | X(11) Y(1) | ⇒ rule 1 (subrule 1b) |
| 3) | X(0) Y(1) X(1) | ⇒ rule 1 (subrule 1c) |
| 4) | X(0) Y(1) X(0) Y(1) X(0) | ⇒ rule 1 (subrule 1d) |
| 5) | X(0) Y(0) | ⇒ rule 2 |
| 6) | X(10) Y(0) Y(1) Y(0) | ⇒ rule 3 (subrule 3a) |
| 7) | X(11) Y(0) Y(1) X(0) Y(0) | ⇒ rule 3 (subrule 3b) |
| 8) | X(10) Y(0) Y(0) | ⇒ rule 3 (subrule 3c) |
| 9) | X(11) Y(0) X(0) Y(0) | ⇒ rule 3 (subrule 3d) |
| 10) | X(0) Y(1) X(0) Y(0) | ⇒ rule 4 (subrule 4a) |
| 11) | X(0) Y(0) X(0) Y(1) Y(1) | ⇒ rule 4 (subrule 4b) |

Note that the rule prefix related to rule 2, is (in a sense) a prefix of the rule prefix related to subrule 4b.

An example data structure (search tree) for performing a 'modified' longest-matching-prefix search (lookup) on the range tokens obtained from the parallel basic range searches, in order to determine the highest priority applicable rule, is shown in Fig.8. In each node the next node is selected based on one bit that is taken either from the range token that is obtained from the basic range search in the X or Y dimension.
The differences of this longest-matching-prefix search tree as compared to other known LMP search trees (e.g. the one of Fig.5) are: (a) Instead of a single search key, a pair of separate (partial) search keys is used as input. (b) Each entry in the search tree structure contains, in addition to the output indications (next entry to be used; rule identifier), also an indication from which one of the two (partial) input search keys the next control bit is to be taken. A further short description of the operation is given later.

For example, if the input to the classification operation is 'located' within the area [X6,Y3] in Fig.6, then the following two range tokens would be the result of the parallel basic range search:
X dimension: 00 (X6)
Y dimension: 011 (Y3)

In Fig.8, along the path through the data structure to rule 4, also rule 2 is found; however, since rule 4 corresponds to a longer rule prefix, rule 4 is selected, which is correct since rule 4 has a higher priority than rule 2.

### Incremental Updating

Two examples will show how the classification data structure can be incrementally updated, for addition respectively removal of a rule. Incremental updates allow to quickly update the classification data structure in order to immediately reflect the new situation after the addition or removal of a rule. However, typically a more efficient structure is obtained when the entire data structure is build from scratch. In a practical system, this could be applied by regenerating the entire structure only after a fixed number of updates or after a certain period, and incrementally updating the data structure between these complete rebuilds.

### Incremental addition of a rule

### Basic ranges

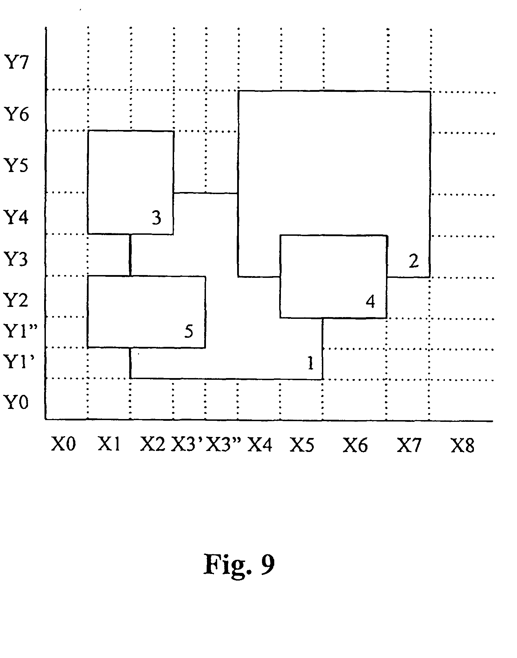

Fig.9 shows an example of the addition of a rule 5, to the original set of rules as shown in Fig.2. In order to implement this new rule, the basic ranges X3 and Y1 are split into X3' and X3", and Y1' and Y1" respectively, to match the rule boundaries.

### Primitive range hierarchy

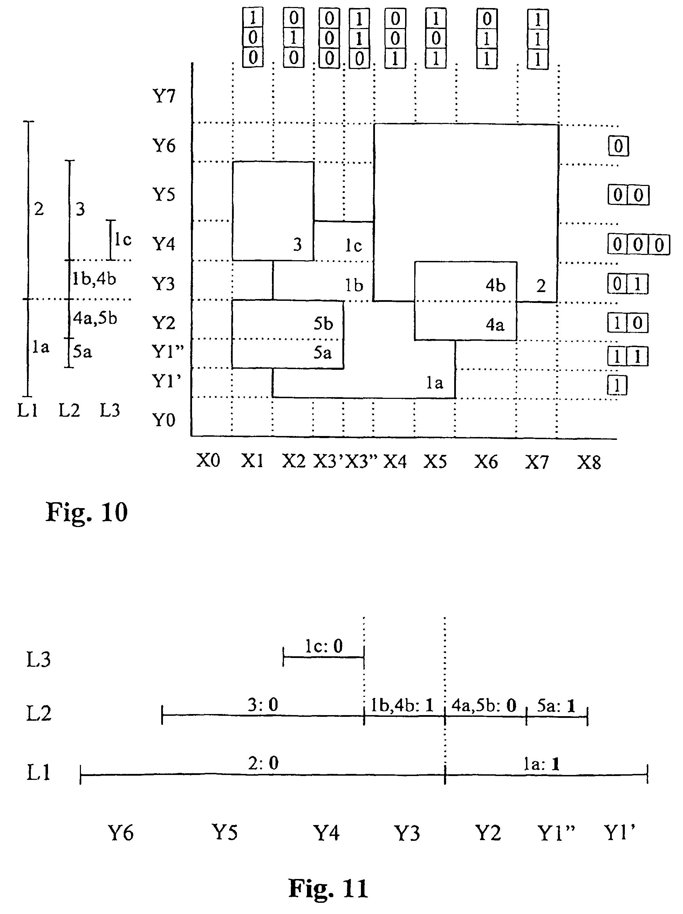

The next step is to update the primitive range hierarchy that was shown in Fig.3 and Fig.4. This is shown in Fig.10 and Fig.11. The Y rule range of rule 5 (Y1" and Y2) will be split into two primitive ranges 5a and 5b (because it partially overlaps with the already existing primitive range 4a). Primitive range 5a is merged with primitive range 4a now denoted as primitive range '4a,5b', and primitive range 5a is added at layer 2. Fig.11shows the primitive range IDs. Primitive range la at layer 1 originally had only one subrange at layer 2, namely primitive range 4a. Primitive range 4a was assigned a one-bit primitive range ID equal to '0'. Now a second primitive range at layer 2, namely primitive range 5a, is added as subrange of primitive range la. Primitive range 5a can now be assigned directly the primitive range ID '1', since not all the possible one-bit primitive range IDs had been assigned to all subranges at layer 2 of primitive range 1a. If this would not have been the case, then all the primitive range IDs of the subranges would have to be extended with one bit and reassigned. In that case, all the basic range IDs and rule prefixes that are affected by these primitive range IDs changes, have to be recalculated again and updated in the data structure.
It is therefore important for being able to perform incremental updates, that 'spare' primitive range IDs are kept throughout the primitive range hierarchy in order to limit the number of changes that have to be made for the addition of a new primitive range. Now a variable-length range token for the new basic range Y1" can be derived in the same way as described in the first example. The basic range Y1' will take over the range token of the original basic range Y1.

In Fig.3 it can be seen that only 7 out of 8 possible three bit fixed sized range tokens have been assigned to basic ranges in the X dimension; only range token '000' has not been assigned. This 'spare' range token will now be assigned to basic range X3' while basic range X3'' is assigned the range token '011' of the original basic range X3.

Fig.10 shows the range tokens that now have been assigned to the basic ranges in the X and Y dimensions (above and at the right side of the rule/range diagram).

### Rule prefixes

Based on the addition of rule 5 and the new basic ranges and range tokens the set of rule prefixes has to be updated in the following way:
Rule 5 covers the basic ranges X1, X2 and X3' in the X dimension, and has a higher priority than rule 1. Therefore the following rule prefixes are added:

| | |
|---|---|
| 00110 | ⇒ rule 5 |
| 00111 | ⇒ rule 5 |
| 01010 | ⇒ rule 5 |
| 01011 | ⇒ rule 5 |
| 00010 | ⇒ rule 5 |
| 00011 | ⇒ rule 5 |

Basic ranges X3' and X3" inherit the rule prefixes related to the original basic range X3.
Since basic range X3" has the same range token '011' as the original basic range X3, only the following rule prefixes that are related to the original basic range X3, have to be added for basic range X3' :

| | |
|---|---|
| 000000 | ⇒ rule 1 |
| 0001 | ⇒ rule 1 |

The total rule prefix list now becomes (in bold are the new rule prefixes):

| | Rule Prefix | |
|---|---|---|
| 1) | 00100 | ⇒ rule 3 |
| **2)** | **00110** | **⇒ rule 5** |
| **3)** | **00111** | **⇒ rule 5** |
| 4) | 01000 | ⇒ rule 3 |
| 5) | 01001 | ⇒ rule 1 |
| 6) | 0101 | ⇒ rule 1 |
| **7)** | **01010** | **⇒ rule 5** |
| **8)** | **01011** | **⇒ rule 5** |
| **9)** | **000000** | **⇒ rule 1** |
| **10)** | **0001** | **⇒ rule 1** |
| **11)** | **00010** | ⇒ **rule 5** |
| **12)** | **00011** | ⇒ **rule 5** |
| 13) | 011000 | ⇒ rule 1 |
| 14) | 01101 | ⇒ rule 1 |
| 15) | 0111 | ⇒ rule 1 |
| 16) | 1001 | ⇒ rule 1 |
| 17) | 1000 | ⇒ rule 2 |
| 18) | 1011 | ⇒ rule 1 |
| 19) | 10110 | ⇒ rule 4 |
| 20) | 1010 | ⇒ rule 2 |
| 21) | 10101 | ⇒ rule 4 |
| 22) | 11010 | ⇒ rule 4 |
| 23) | 1100 | ⇒ rule 2 |
| 24) | 11001 | ⇒ rule 4 |
| 25) | 1110 | ⇒ rule 2 |

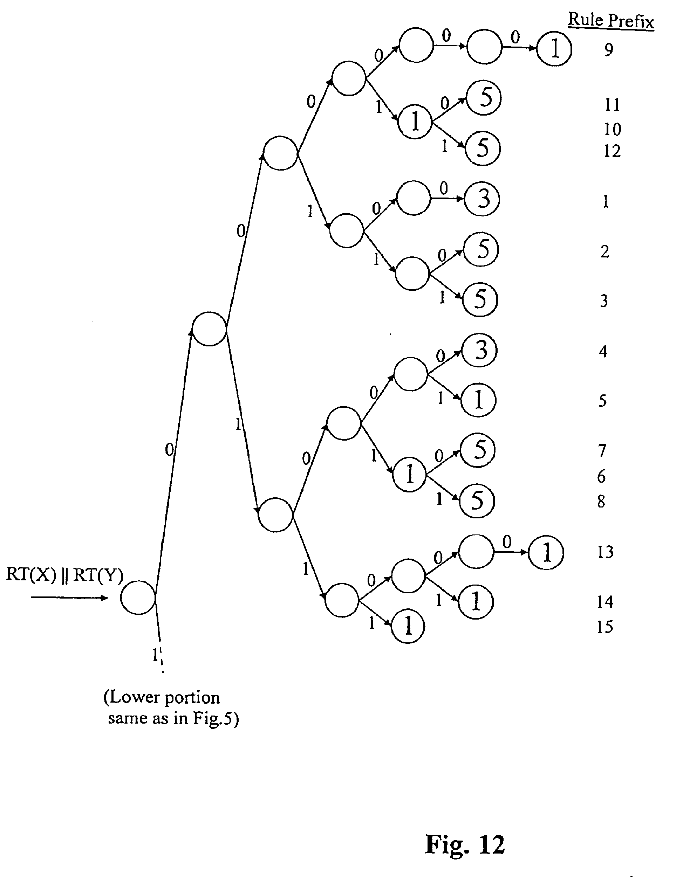

Fig.12 shows the corresponding updated version of the search tree structure of Fig.5.
Actually, Fig. 12 shows only the upper portion of the search tree structure, because in the lower portion, no updatings were necessary and it would be identical to the lower portion of the tree structure in Fig.5.

### Incremental deletion of a rule

The deletion of a rule from the existing structure is relatively easy. Such deletion just involves removing of all references to that rule from the longest-matching-prefix search tree structure. For example, deletion of rule 2 would require removing four references to this rule for the tree shown in Fig.5 (Example 1), or only removing one reference to this rule from the tree shown in Fig.8 (Example 2).

### Operation of the Search Trees

A short description is now given for the operation of the search trees which are shown schematically in Fig.5, Fig.8 and Fig.12. Each of the circles in these search trees is a node which may be e.g. a group of entries in memory. Each node may include the following group of entries:
a) X or Y (input key to be evaluated)
b) Bit No. (key bit to be evaluated)
c) First Pointer to next node (if bit is zero)
d Second Pointer to next node (if bit is one)
e) Rule Identifier

The X or Y selection (field a) is only required if parallel partial search keys are used (Fig.8). It is not required if a single input search key is used (Fig.3 and Fig.12). The bit number (field b) is not required if the evaluated bits are counted by the processor. A rule identifier is only stored in those nodes where it is actually required (cf. in Fig.3 and Fig.8).

The longest-matching-prefix lookup process in the search tree may include the following steps:
1) Store the plural partial search keys (or the single search key).
2) Set the bit counter(s) to zero (if bit counter(s) provided).
3) Go to the entry node of the search tree.
4) Get the bit indicated by the bit no. in entry (b) (or by the bit counter contents) from the input key indicated in entry (a), or from the single search key.
5) Detect the binary value of this bit and depending on this value, either extract the first or second pointer from entries (c) and (d).
6) Extract the rule identifier from entry (e) (if present) and buffer it.
7) Detect whether the last bit of the current input key(s) was evaluated;
if yes: provide buffered rule identifier as output, or provide NIL output (if no rule identifier was buffered);
if no: (increase respective bit count by one, if available); go to next node in the search tree, using the pointer found in step (5), and repeat steps (4) to (7).

The search process ends and the last buffered rule identifier is provided as output if (a) a leaf node (end node) of the tree is reached, or if (b) for the next step, a bit would have to be evaluated from an input search key which is already exhausted.

### Terms Listing

**rule** = one of plural different instructions for handling packets (or other items) depending on a classification in response to values of specific criteria they contain ( rules are normally assigned priorities among each other)
**rule diagram** = a diagram in 2 (or n) dimensions showing the ranges of criteria values for which each of the rules is valid
**basic range** = each of the ranges in a rule diagram ( = Xn / Yn)
(generated by projecting all rule rectangle borders onto the rule diagram axes)
r**ule range** = several basic ranges for which a rule is valid
(generated by projecting the borders of one rule rectangle onto rule diagram axes)
**rule order** = sequence of rules according to priority or size etc.
**rule identifier** = result of classification operation
(output of a final longest-matching-prefix lookup operation)
**range token** = a bit vector representing a basic range
**criterion** = a field in a packet (in an item) which is evaluated for classification
(e.g. source address or destination address)
**criterion value** = actual value of criterion as contained in evaluated packet (item)
also: **input value or input parameter** (for classification)
**search key** = combination of range tokens for one particular point in the rule diagram, i.e. for one particular set of input values
(used as input for longest-matching-prefix lookup to find associated rule identifier)
**rule prefix** = a prefix which is implemented in a longest-matching-prefix search tree and represents the path to an output, i.e. the path to a rule identifier
**primitive range** = one of plural ranges used for generating range tokens
(may include one or several basic ranges)
(primitive ranges are arranged in hierarchical layers)
**primitive range identification** = a single bit or a bit group for distinguishing primitive ranges within one layer

## Claims

1. A method for classifying a data packet to determine an applicable handling rule in response to the combination of values of at least two different criteria present in the data packet, comprising
- detecting for each criterion, the value (I₁; I₂) represented in the data packet to be classified,
- for each of said criteria values (I₁; I₂), selecting a range token (RT(Xᵢ); RT(Yⱼ)) from a set of range tokens each representing one interval of values of the respective criterion the range tokens (RT(Xᵢ); RT(Yⱼ)) of at least one set being of non-uniform length, and
- using a combination of the selected range tokens (RT(Xᵢ); RT(Yⱼ)) as input for a lookup operation in a search structure comprising rule identifiers, to find one rule identifier by a longest-matching-prefix search operation, **characterised in that** the intervals are non-overlapping intervals.

2. Method according to claim 1, using as search structure a search tree which is so designed that when plural rules are valid for a particular intersection of criterion value intervals represented by a combination of range tokens (RT(Xᵢ); RT(Yⱼ)), the respective lookup operation results in the output of an identification for a single rule which has the highest rank or priority in a given order.

3. Method according to claim 1, wherein range tokens (RT(Xᵢ); RT(Yⱼ)) of non-uniform length are provided in the set of range tokens for only one of the criteria, and wherein the combination of range tokens (RT(Xᵢ); RT(Yⱼ)) which is used as input for the longest-matching-prefix search operation is a concatenation of the range tokens (RT(Xᵢ); RT(Yⱼ)) which were determined for the criterion values (I₁; I₂) for the data packet.

4. Method according to claim 1, wherein range tokens (RT(Xᵢ); RT(Yⱼ)) of non-uniform length are provided in the set of range tokens for at least two of the criteria, and wherein the determined range tokens (RT(Xᵢ); RT(Yⱼ)) for the criteria values (I₁; I₂) of the particular data packet are used as parallel inputs to the search structure; the entries in the search structure containing indications from which of the input range tokens (RT(Xᵢ); RT(Yⱼ)) the next digit is to be taken for the longest-matching-prefix search operation.

5. Method according to claim 1, in which the search structure is a search tree based on rule prefixes, each rule prefix representing a path to a node in the search tree containing one rule identifier, and in which a hierarchy of non-overlapping primitive ranges, each equal to one or plural basic value ranges of a criterion, is used for generating range tokens (RT(Xᵢ); RT(Yⱼ)) and said rule prefixes so that a longest-matching-prefix search operation can be used for finding the appropriate rule identifier.

6. Method according to claim 5, in which each rule prefix either corresponding to, or being a prefix of, at least one combination of selected range tokens (RT(Xᵢ); RT(Yⱼ)) which occur as input to the longest-matching-prefix search operation for finding a rule identifier.

7. Method according to claim 1,
wherein the search structure comprises a tree structure including several nodes, selected ones of said nodes containing a rule identifier, each path through said tree structure to a selected node representing a rule prefix, so that one rule identifier is determined by using a particular input combination of range tokens (RT(Xᵢ); RT(Yⱼ)) for a longest-matching-prefix lookup operation.

8. Method according to claim 7, wherein the rule prefixes for determining the paths in the search structure are so selected that the same path to a stored rule identifier is followed in response to different combinations of range tokens (RT(Xᵢ); RT(Yⱼ)) which have a common prefix and are associated with the same rule.

9. Method according to claim 7, for using as input plural range tokens (RT(Xᵢ); RT(Yⱼ)) representing the input criteria values (I₁; I₂), as plural parallel partial search keys; wherein the nodes include information to select one of the plural search keys in the respective node for controlling the current step in the lookup procedure.

10. Method according to claim 1,
- wherein each of said rules being valid for a different set of intersections of basic ranges (Xᵢ; Yⱼ) of values (I₁; I₂) of n variables in n dimensions; each packet containing a value (I₁; I₂) of each of said n variables as criteria;
- wherein the range tokens (RT(Xᵢ); RT(Yⱼ)) are bit vectors assigned to said basic ranges (Xᵢ; Yⱼ), the range tokens (RT(Xᵢ); RT(Yⱼ)) being so selected that some of the range tokens (RT(Xᵢ); RT(Yⱼ)) have common prefixes, reflecting the distribution of rules over groups of basic range intersections (Xᵢ; Yⱼ);
- wherein the search structure is organized to reflect the prefix-oriented distribution of range tokens (RT(Xᵢ); RT(Yⱼ));
- and wherein the identifier of the applicable rule is found by a longest-matching-prefix search operation in said search structure, using as input the formed combination of range tokens (RT(Xᵢ); RT(Yⱼ)).

11. Method according to claim 1,
wherein the search structure comprises a plurality of nodes containing information for directing a search process along one of plural paths leading to selected nodes each containing a category identifier, each such path representing a rule prefix;
the set of rule prefixes being adapted to the set of all possible lookup search key combinations, for allowing a longest-matching-prefix search.

12. Method according to claim 1, comprising
- determining into which one of predetermined non-overlapping basic ranges (Xᵢ; Yⱼ) the detected value (I₁; I₂) falls;
- obtaining for each determined basic range (Xᵢ; Yⱼ), the associated range token (RT(Xᵢ); RT(Yⱼ)) representing that basic range (Xᵢ; Yⱼ).

13. Method according to claim 1, in which a hierarchical system of primitive ranges is used for generating the range tokens (RT(Xᵢ); RT(Yⱼ)) of non-uniform length; each primitive range being equal to one or plural basic value intervals, depending on the distribution of the association of each of the categories with the basic value intervals, so that a prefix-oriented set of range tokens (RT(Xᵢ); RT(Yⱼ)) is obtained, suitable for a longest-matching-prefix lookup procedure.

14. Apparatus for classifying a data packet to determine an applicable handling rule in response to the combination of values of at least two different criteria present in the data packet,
which apparatus comprises means adapted for executing a method as claimed in any one of the preceding claims.

## Patentansprüche

1. Verfahren zum Klassifizieren eines Datenpaketes, um anhand einer Kombination von Werten aus mindestens zwei unterschiedlichen, in dem Datenpaket vorhandenen Kriterien eine anwendbare Verarbeitungsregel zu bestimmen, das Folgendes umfasst:
- Ermitteln des in dem zu klassifizierenden Datenpaket dargestellten Wertes (I₁; I₂) für jedes Kriterium;
- Auswählen eines Bereichstokens (RT(Xᵢ); RT(Yⱼ)) für jeden der Kriterienwerte (I₁; I₂) aus einem Satz von Bereichstoken, von denen jedes ein Wertintervall des betreffenden Kriteriums repräsentiert, wobei die Bereichstoken (RT(Xᵢ); RT(Yⱼ)) mindestens eines Satzes eine uneinheitliche Länge aufweisen; und
- Verwenden einer Kombination der ausgewählten Bereichstoken (RT(Xᵢ); RT(Yⱼ)) als Eingangswert für eine Nachschlageoperation in einer Regelkennungen umfassenden Suchstruktur, um durch eine Suchoperation nach dem längsten übereinstimmenden Präfix eine Regelkennung zu finden;
**dadurch gekennzeichnet, dass** es sich bei den Intervallen um sich nicht überlappende Intervalle handelt.

2. Verfahren nach Anspruch 1, bei dem als Suchstruktur ein Suchbaum verwendet wird, der so gestaltet ist, dass, wenn mehrere Regeln für einen bestimmten Schnittpunkt von Kriterienwertintervallen - repräsentiert durch eine Kombination von Bereichstoken (RT(Xᵢ); RT(Yⱼ)) - gültig sind, die betreffende Nachschlageoperation zur Ausgabe einer Kennung für eine einzige Regel führt, die die höchste Priorität oder den höchsten Rang in einer gegebenen Reihenfolge besitzt.

3. Verfahren nach Anspruch 1, bei dem Bereichstoken
(RT(Xᵢ); RT(Yⱼ)) mit uneinheitlicher Länge in dem Satz von Bereichstoken für nur eines der Kriterien bereitgestellt werden, und bei dem die Kombination von Bereichstoken (RT(Xᵢ); RT(Yⱼ)), die als Eingangswert für die Suchoperation nach dem längsten übereinstimmenden Präfix verwendet wird, aus einer Verkettung der Bereichstoken (RT(Xᵢ); RT(Yⱼ)) besteht, welche für die Kriterienwerte (I₁; I₂) aus dem Datenpaket bestimmt wurden.

4. Verfahren nach Anspruch 1, bei dem Bereichstoken
(RT(Xᵢ); RT(Yⱼ)) mit uneinheitlicher Länge in dem Satz von Bereichstoken für mindestens zwei der Kriterien bereitgestellt werden und bei dem die festgelegten Bereichstoken (RT(Xᵢ); RT(Yⱼ)) für die Kriterienwerte (I₁; I₂) des jeweiligen Datenpaketes als parallele Eingangswerte für die Suchstruktur verwendet werden, wobei die Einträge in der Suchstruktur Hinweise darauf enthalten, von welchem der Eingangs-Bereichstoken (RT(Xᵢ); RT(Yⱼ)) die nächste Ziffer für die Suchoperation nach dem längsten übereinstimmenden Präfix zu entnehmen ist.

5. Verfahren nach Anspruch 1, bei dem die Suchstruktur aus einem Suchbaum besteht, der auf Regelpräfixen beruht, wobei jedes Regelpräfix einen Pfad zu einem Suchbaumknoten mit einer Regelkennung repräsentiert, und bei dem eine Hierarchie sich nicht überlappender Elementarbereiche, von denen jeder einem oder mehreren Basiswertebereichen eines Kriteriums entspricht, zur Erzeugung der Bereichstoken (RT(Xᵢ); RT(Yⱼ)) und der Regelpräfixe verwendet wird, sodass eine Suchoperation nach dem längsten übereinstimmenden Präfix zum Auffinden der entsprechenden Regelkennung genutzt werden kann.

6. Verfahren nach Anspruch 5, bei dem jedes Regelpräfix entweder mindestens einer Kombination ausgewählter Bereichstoken (RT(Xᵢ); RT(Yⱼ)) entspricht oder ein Präfix für mindestens eine Kombination ausgewählter Bereichstoken (RT(Xᵢ); RT(Yⱼ)) darstellt, die als Eingangswert für die Suchoperation nach dem längsten übereinstimmenden Präfix auftreten, um eine Regelkennung zu finden.

7. Verfahren nach Anspruch 1, bei dem die Suchstruktur eine Baumstruktur mit mehreren Knoten umfasst, die ausgewählten Knoten eine Regelkennung enthalten und jeder Pfad durch die Baumstruktur zu einem ausgewählten Knoten führt, welcher ein Regelpräfix repräsentiert, sodass durch die Anwendung einer bestimmten Eingangskombination von Bereichstoken (RT(Xᵢ); RT(Yⱼ)) bei einer Nachschlageoperation nach dem längsten übereinstimmenden Präfix eine Regelkennung bestimmt wird.

8. Verfahren nach Anspruch 7, bei dem die Regelpräfixe zur Bestimmung der Pfade in der Suchstruktur so ausgewählt sind, dass die Suchoperation anhand der unterschiedlichen Kombinationen von Bereichstoken (RT(Xᵢ); RT(Yⱼ)), die über ein gemeinsames Präfix verfügen und derselben Regel zugeordnet sind, demselben Pfad zu einer gespeicherten Regelkennung folgt.

9. Verfahren nach Anspruch 7 zur Verwendung einer Menge von Bereichstoken (RT(Xᵢ); RT(Yⱼ)) als Eingangswerte, welche die Eingangskriterienwerte (I₁; I₂) als eine Menge paralleler Teil-Suchschlüssel repräsentieren, bei dem die Knoten Informationen zur Auswahl eines Schlüssels aus der Menge der Suchschlüssel in dem betreffenden Knoten enthalten, um den aktuellen Schritt der Nachschlageprozedur zu steuern.

10. Verfahren nach Anspruch 1,
- bei dem jede der Regeln für einen anderen Satz von Schnittpunkten von Basisbereichen (Xᵢ; Yⱼ) mit den Werten (I₁; I₂) von n Variablen in n Dimensionen gültig ist,
wobei jedes Paket einen Wert (I₁; I₂) von jeder der n Variablen als Kriterien enthält;
- bei dem es sich bei den Bereichstoken (RT(Xᵢ); RT(Yⱼ)) um Bitvektoren handelt, die den Basisbereichen (Xᵢ; Yⱼ) zugewiesen sind, und die Bereichstoken (RT(Xᵢ); RT(Yⱼ)) so ausgewählt sind, dass einige der Bereichstoken (RT(Xᵢ); RT(Yⱼ)) gemeinsame Präfixe haben, welche die Verteilung von Regeln über Gruppen von Basisbereichsschnittpunkten (Xᵢ; Yⱼ) widerspiegeln;
- bei dem die Suchstruktur so organisiert ist, dass sie die präfixorientierte Verteilung der Bereichstoken (RT(Xᵢ) ; RT(Yⱼ)) widerspiegelt;
- und bei dem die Kennung der anwendbaren Regel in der Suchstruktur durch eine Suchoperation nach dem längsten übereinstimmenden Präfix gefunden wird, wobei als Eingangswert eine aus den Bereichstoken (RT(Xᵢ); RT(Yⱼ)) gebildete Kombination verwendet wird.

11. Verfahren nach Anspruch 1, bei dem die Suchstruktur eine Vielzahl von Knoten umfasst, welche Informationen zum Leiten eines Suchprozesses entlang der Vielzahl von Pfaden umfassen, die zu ausgewählten Knoten führen, wobei jeder Knoten eine Kategoriekennung enthält, jeder Pfad ein Regelpräfix repräsentiert und der Satz von Regelpräfixen an den Satz aller möglichen Kombinationen von Suchschlüsseln zum Nachschlagen angepasst ist, um die Suche nach dem längsten übereinstimmenden Präfix zu ermöglichen.

12. Verfahren nach Anspruch 1, das Folgendes umfasst:
- Bestimmen, in welchen aus einer Gruppe von vorbestimmten, nicht überlappenden Basisbereichen (Xᵢ; Yⱼ) der ermittelte Wert (I₁; I₂) fällt;
- Ermitteln des zugehörigen Bereichstokens (RT(Xᵢ); RT(Yⱼ)), das den Basisbereich (Xᵢ; Yⱼ) repräsentiert, für jeden ermittelten Basisbereich (Xᵢ; Yⱼ).

13. Verfahren nach Anspruch 1, bei dem ein hierarchisches System von Elementarbereichen zur Erzeugung der Bereichstoken (RT(Xᵢ); RT(Yⱼ)) mit uneinheitlicher Länge verwendet wird,
wobei jeder Elementarbereich, in Abhängigkeit von der Verteilung der Zuordnung jeder Kategorie zu den Basisintervallen, einem oder mehreren Basiswertintervallen entspricht, sodass man einen präfixorientierten Satz von Bereichstoken (RT(Xᵢ); RT(Yⱼ)) erhält, der für eine Nachschlageprozedur nach dem längsten übereinstimmenden Präfix geeignet ist.

14. Vorrichtung zur Klassifizierung eines Datenpaketes, um anhand der Kombination von Werten aus mindestens zwei unterschiedlichen, in dem Datenpaket vorhandenen Kriterien eine anwendbare Verarbeitungsregel zu bestimmen, wobei die Vorrichtung Mittel umfasst, die an die Durchführung eines Verfahrens nach einem der vorangegangenen Ansprüche angepasst sind.

## Revendications

1. Un procédé de classification de paquets de données, afin de déterminer une règle de traitement applicable, en réponse à la combinaison de valeurs d'au moins deux critères différents, présents dans le paquet de données, comprenant:
- la détection, pour chaque critère, de la valeur (I₁; I₂) représentée dans le paquet de données à classer,
- la sélection, pour chacune des dites valeurs de critères (I₁;I₂), d'un jeton de plage (RT(Xᵢ);RT(Yⱼ)) à partir d'un jeu de jetons de plage, représentant chacun un intervalle de valeurs du critère respectif, les jetons de plage (RT(Xᵢ);RT(Yⱼ)) d'au moins un jeu étant de longueur non uniforme, et
- l'utilisation d'une combinaison des jeux de plage (RT(Xᵢ);RT(Yⱼ)) sélectionnés en tant qu'entrées pour une opération de consultation dans une structure de recherche comprenant des identificateurs de règles, pour rechercher un identificateur de règle par une opération de recherche de préfixe adapté de longueur maximal, **caractérisé en ce que** les intervalles sont des intervalles sans chevauchement.

2. Procédé selon la revendication 1, utilisant en tant que structure de recherche un arbre de recherche conçu pour que, lorsqu'une pluralité de règles sont valides, pour une intersection particulière d'intervalle de valeur de critère représentés par une combinaison de jetons de plage (RT(Xᵢ);RT(Yⱼ)), l'opération de consultation respective fournit en résultat une identification pour une règle unique ayant le rang de priorité maximal dans un ordre donné.

3. Procédé selon la revendication 1, dans lequel des jetons de plage (RT(Xᵢ);RT(Yⱼ)) de longueur non uniforme sont prévus dans le jeu de jetons de plage pour un seul des critères, et dans lequel la combinaison des jetons de plage (RT(Xᵢ);RT(Yⱼ)), utilisée comme entrée pour l'opération de recherche à préfixe adaptée de longueur maximale, est une concaténation des jetons de plage (RT(Xᵢ);RT(Yⱼ)) qui ont été déterminés pour les valeurs de critères (I₁;I₂) pour le paquet de données.

4. Procédé selon la revendication 1, dans lequel des jetons de plage (RT(Xᵢ);RT(Yⱼ)) de longueur non uniforme sont prévus dans le jeu des jetons de plage pour au moins deux des critères, et dans lequel les jetons de plage (RT(Xᵢ);RT(Yⱼ)), déterminés pour les valeurs de critères (I₁;I₂) du paquet de données particulier, sont utilisés en tant qu'entrées parallèles à la structure de recherche; les entrées dans la structure de recherche contenant des indications à partir des jetons de plage (RT(Xᵢ);RT(Yⱼ)) d'entrée desquels le chiffre le suivant doit être pris pour l'opération de recherche de préfixe adapté à longueur maximal.

5. Procédé selon la revendication 1, dans lequel la structure de recherche est un arbre de recherche basé sur des préfixes de règles, chaque préfixe de règle représentant un chemin vers un noeud dans l'arbre de recherche, contenant un identificateur de règle, et dans lequel une hiérarchie de plages primitives ne se chevauchant pas, chacune étant égale à une ou plusieurs plages de valeur de base d'un critère, est utilisée pour générer des jetons de plage (RT(Xᵢ);RT(Yⱼ)) et lesdits préfixes de règles, de manière qu'une opération de recherche de préfixe adapté à longueur maximale puisse être utilisée pour la recherche de l'identificateur de règle approprié.

6. Procédé selon la revendication 5, dans lequel chaque préfixe de règle, soit correspond à, soit est un préfixe d', au moins une combinaison des jetons de plage (RT(Xᵢ);RT(Yⱼ)) sélectionnés qui apparaissent en entrée à l'opération de recherche de préfixe adaptée à longueur maximale pour rechercher un identificateur de règle.

7. Procédé selon la revendication 1, dans lequel la structure de recherche comprend une structure en arbre incluant plusieurs noeuds, certains noeuds sélectionnés parmi lesdits noeuds contenant un identificateur de règle, chaque chemin à travers ladite structure en arbre vers un noeud sélectionné représentant un préfixe de règle, de manière qu'un identificateur de règle soit déterminé par utilisation d'une combinaison d'entrée particulière de jetons de plage (RT(Xᵢ);RT(Yⱼ)) pour une opération de consultation de préfixes adaptés à longueur maximale.

8. Procédé selon la revendication 7, dans lequel les préfixes de règles pour la détermination des chemins dans la structure de recherche sont sélectionnés de manière que le même chemin vers un identificateur de règle stocké soit suivi, en réponse à des combinaisons différentes de jetons de plage (RT(Xᵢ);RT(Yⱼ)) qui ont un préfixe commun et sont associés à la même règle.

9. Procédé selon la revendication 7, pour l'utilisation, en tant qu'entrée, d'une pluralité de jetons de plage (RT(Xᵢ);RT(Yⱼ)) représentant les valeurs de critères d'entrée (I₁;I₂), en tant que pluralité de clés de recherche partielle parallèle; dans lequel les noeuds comprennent de l'information pour sélectionner l'une de la pluralité des clés de recherche dans le noeud respectif, pour commander l'étape actuelle dans la procédure de consultation.

10. Procédé selon la revendication 1,
- dans lequel chacune desdites règles est valide pour un jeu différent d'intersections de plages de base (Xi;Yj) de valeurs (I₁;I₂) de n variables dans n dimensions; chaque paquet contenant une valeur (I₁;I₂) de chacune desdites n variables en tant que critères;
- dans lesquels les jetons de plage (RT(Xᵢ);RT(Yⱼ)) sont des vecteurs de bits affectés auxdites plages de base (Xi;Yj), les jetons de plage (RT(Xᵢ);RT(Yⱼ)) étant sélectionnés de manière que certains des jetons de plage (RT(Xᵢ);RT(Yⱼ)) aient des préfixes communs, reflétant la distribution des règles sur des groupes d'intersections de plages de base (Xi;Yj);
- dans lequel, la structure de recherche est organisée pour refléter la distribution, orientée préfixe, des jetons de plage (RT(Xᵢ);RT(Yⱼ));
- et dans lequel l'identificateur de la règle applicable est trouvé par une opération de recherche de préfixe adapté à longueur maximale dans ladite structure de recherche, en utilisant en entrée la combinaison formée des jetons de plage (RT(Xᵢ);RT(Yⱼ)).

11. Procédé selon la revendication 1,
dans lequel la structure de recherche comprend une pluralité de noeuds contenant de l'information pour diriger un processus de recherche parmi l'un d'une pluralité de chemins menant à des noeuds sélectionnés, chacun contenant un identificateur de catégorie, chaque tel chemin représentant un préfixe de règle;
le jeu de préfixe de règles étant adapté au jeu de toutes les combinaisons de clés de recherche de consultation possibles, pour permettre une recherche de préfixe adaptée à longueur maximale.

12. Procédé selon la revendication 1, comprenant
- la détermination de celle des plages de base (Xi;Yj) sans chevauchement prédéterminée, dans laquelle tombe la valeur (I₁;I₂) détectée;
- l'obtention, pour chaque plage de base (Xi;Yj) déterminée, du jeton de plage (RT(Xᵢ);RT(Yⱼ)) associé, représentant cette plage de base (Xi;Yj).

13. Procédé selon la revendication 1, dans lequel un système hiérarchique de plages primitives est utilisé pour générer les jetons de plage (RT(Xᵢ);RT(Yⱼ)) de longueur non uniforme; chaque plage primitive étant égale à un ou plusieurs intervalles de valeur de base, selon la distribution de l'association de chacune des catégories aux intervalles de valeur de base, de manière qu'un jeu, orienté préfixe, de jetons de plage (RT(Xᵢ);RT(Yⱼ)) soit obtenu, convenant pour une procédure de consultation de préfixes adaptés à longueur maximal.

14. Dispositif de classification d'un paquet de données, afin de déterminer une règle de traitement applicable en réponse à la combinaison de valeurs d'au moins deux critères différents, présents dans le paquet de données,
ledit dispositif comprenant des moyens, adaptés pour mettre en oeuvre un procédé tel que revendiqué à l'une quelconque des revendications précédentes.
